# FASCICULE DE BREVET EUROPEEN

(11) **EP 4 452 696 B1**
(45) Date de publication et mention de la délivrance du brevet: **14.01.2026**
(21) Numéro de dépôt: 22844640.7
(22) Date de dépôt: 16.12.2022
(51) Int. Cl.: B60R 16/02, H01R 4/64, H01R 13/42, H01R 13/629, B60R 11/02

(54) **KIT DE FIXATION D'UN CONNECTEUR ÉLECTRIQUE SUR UN CHÂSSIS, DISPOSITIF DE FIXATION ET DISPOSITIF ÉLECTRONIQUE ASSOCIÉS**
KIT ZUR BEFESTIGUNG EINES ELEKTRISCHEN VERBINDERS AN EINEM RAHMEN UND ZUGEHÖRIGE BEFESTIGUNGSVORRICHTUNG UND ELEKTRONISCHE VORRICHTUNG
KIT FOR FASTENING AN ELECTRICAL CONNECTOR TO A FRAME, AND ASSOCIATED FASTENING DEVICE AND ELECTRONIC DEVICE

(30) Priorité: 21.12.2021 FR 2114158
(43) Date de publication de la demande: 30.10.2024
(73) Titulaire: Valeo Comfort and Driving Assistance, 94000 Créteil (FR)
(72) Inventeur: KORCZAK, Stephane, 94000 Créteil (FR); CORDUAN, Patrick, 94000 Créteil (FR)
(74) Mandataire: Delplanque, Arnaud
(86) Numéro de dépôt international: PCT/EP2022/086480
(87) Numéro de publication internationale: WO 2023/117803

(56) Documents cités:
- EP-A2- 2 754 610
- WO-A2-2008/125847
- US-A1- 2012 075 788

## Description

### Domaine technique auquel se rapporte l'invention

La présente invention concerne un kit de fixation d'un connecteur électrique sur un châssis, et plus particulièrement sur un châssis d'écran à affichage dynamique destiné à équiper un véhicule automobile.

### Arrière-plan technologique

La présence dans les véhicules automobiles d'écrans à affichage dynamique, nommés ci-après écrans, a permis d'accroître de façon significative leur confort ainsi que leur sécurité.

Afin de simplifier le montage d'un écran dans l'habitacle confiné d'un véhicule automobile, les extrémités des fils électriques nécessaires au fonctionnement de l'écran sont regroupées au niveau d'un ou de plusieurs connecteurs électriques, dénommé ci-après connecteur écran.

De façon avantageuse, chaque connecteur écran est configuré pour s'emboîter dans un connecteur électrique de forme complémentaire. Ainsi, l'écran peut être connecté rapidement à différents organes du véhicule automobile.

Les écrans sont généralement insérés dans les planches de bord des véhicules automobiles, dans lesquels sont ménagés à cet effet des logements étroits. Les connecteurs écrans doivent alors occuper un volume dédié, dans le fond du logement, pour permettre un encastrement correct de l'écran dans la planche de bord. À cette fin, les connecteurs écrans sont maintenus au châssis de l'écran par l'intermédiaire de dispositifs de fixation, afin de s'assurer de leur bon positionnement jusqu'à l'insertion complète de l'écran dans le tableau de bord.

Les dispositifs de fixation doivent bien entendu résister aux efforts exercés lors de l'insertion, mais également lors du retrait, de l'écran du tableau de bord. C'est pourquoi les connecteurs écrans doivent être fermement maintenus au châssis de l'écran, afin que leur position reste inchangée lors du montage ou démontage de l'écran.

Pour cela, il est connu de l'état de la technique l'utilisation d'un support pour connecteur écran. Le support se compose d'une platine de guidage dont les bords opposés sont destinés à s'enchâsser dans des glissières présentes à la surface d'un connecteur écran. Le connecteur écran est ensuite immobilisé par l'intermédiaire d'une butée, présente à une extrémité d'une languette faisant saillie de la platine de guidage. Or, un mauvais positionnement du connecteur écran vis-à-vis de la platine peut endommager de façon irréversible la languette et, de ce fait, ne plus permettre le maintien du connecteur écran à la platine. Il est alors nécessaire de changer l'ensemble du support.

La platine de guidage du support est maintenue à une extrémité d'un plot d'insertion. Le plot d'insertion s'étend perpendiculairement à la platine de guidage. L'extrémité libre du plot d'insertion est destinée à être insérée en force dans une ouverture ménagée dans le châssis d'un écran. Des lamelles sont présentes sur les parois latérales du plot d'insertion. Les extrémités libres des lamelles sont orientées en direction de la platine de guidage, de sorte à empêcher le retrait du plot d'insertion du châssis. Afin d'obtenir un maintien correct du support au châssis, il est nécessaire de réserver un espace dédié dans le châssis, pour permettre au plot d'insertion de pénétrer suffisamment dans le châssis afin que les lamelles prennent appui contre le châssis.

La stabilité du support est assurée par une butée, interposée entre la platine de guidage et le châssis. La butée permet de maintenir une distance constante entre la platine de guidage et le châssis. Néanmoins, la butée présente l'inconvénient d'encombrer l'espace entre ces deux éléments.

EP 2 754 610 A2 divulgue un kit de fixation d'un connecteur électrique sur un châssis.

L'invention vise à résoudre au moins l'un des problèmes techniques mentionnés ci-dessus, en proposant un kit de fixation d'un connecteur électrique ou connecteur écran sur un châssis, de plus faible encombrement et d'utilisation plus fiable.

### Objet de l'invention

L'invention propose un kit de fixation, sur un châssis, d'un connecteur électrique ou d'un connecteur écran tel que décrit ci-dessus.

Le kit de fixation est remarquable en ce qu'il comprend :
- un support délimité par une face externe, la face externe est traversée par une première ouverture et une deuxième ouverture, entre les deux ouvertures sont présents des moyens de liaison, les moyens de liaison maintiennent à distance de la face externe du support une platine de guidage; et
- une lame de blocage, la lame de blocage est délimitée par une première face et une seconde face, la première face est opposée à la seconde face, la lame de blocage s'étend le long d'une direction principale, entre une extrémité proximale et une extrémité distale, les extrémités proximale et distale sont recourbées en direction de la première face de la lame de blocage, l'extrémité distale de la lame de blocage comporte une encoche qui s'étend le long de la direction principale de sorte à permettre le passage des moyens de liaison du support, la seconde face de la lame de blocage comprend au moins une excroissance agencée de manière à être en vis-à-vis de la platine guidage, lorsque :
   - l'extrémité proximale de la lame de blocage prend appui contre un bord de la deuxième ouverture de la face externe du support ; et
   - l'extrémité distale de la lame de blocage prend appui contre un bord de la première ouverture de la face externe du support ; et
   - les moyens de liaison passent à travers l'encoche de la lame de blocage.

De façon avantageuse, la lame de blocage est configurée pour prendre appui contre le support, afin d'immobiliser par l'intermédiaire d'au moins une excroissance, un connecteur écran lié à la platine de support. En d'autres termes, au moins une partie du connecteur écran, interposée entre la platine de support et la lame de blocage, est prise en étaux entre au moins une excroissance de la lame de blocage et la platine de support. De ce fait, la platine de support selon l'invention ne comporte pas d'appendice saillant dans ce but, susceptible de se tordre ou bien de se casser lors de l'emboîtement du connecteur écran sur la platine de guidage. L'invention propose ainsi une solution plus résiliente vis-à-vis de l'état de la technique.

Selon un autre avantage, en cas d'endommagement de la lame de blocage, celle-ci peut être substituée par une nouvelle. Il n'est alors pas nécessaire de changer l'ensemble du kit de fixation. Le kit de fixation selon l'invention est donc plus économique d'utilisation.

Selon un autre mode de réalisation de l'invention, entre l'encoche et un bord latéral de la lame de blocage, est présente au moins une bosse. Une ou plusieurs bosses sont destinées à entraver le déplacement de glissières, solidaires d'un connecteur électrique ou connecteur écran, lors du déplacement des glissières le long de la platine de guidage. Autrement dit, la ou les bosses participent au maintien du connecteur écran à la platine de guidage. Selon un autre avantage, les bosses permettent également de contrôler et de maintenir constante, la distance entre la platine de guidage et le connecteur écran.

Selon un autre mode de réalisation de l'invention, la lame de blocage comprend une butée rétractable, au niveau de sa seconde face, entre l'extrémité proximale et l'encoche. La butée rétractable est destinée à bloquer le mouvement de translation d'un connecteur d'écran le long de la platine de guidage.

De préférence, la butée rétractable est formée par une lamelle souple qui s'étend le long de la direction principale de la lame de blocage, la lamelle comportant une extrémité libre faisant face à l'extrémité distale de la lame de blocage. Selon un mode de réalisation préféré, l'extrémité libre de la lamelle s'écarte de la lame.

Selon un mode de réalisation préféré, la lame de blocage comporte un évidement, en vis-à-vis de la lamelle, apte à accueillir l'extrémité libre de la lamelle. Ce mode de réalisation favorise un débattement plus important de l'extrémité de libre de la lamelle, afin de pouvoir plus facilement détacher un connecteur d'écran de la platine de guidage.

Selon un autre mode de réalisation de l'invention, l'extrémité proximale de la lame de blocage forme un coude, apte à entourer un bord de la deuxième ouverture de la face externe. Selon un mode de réalisation préféré, le bout de l'extrémité proximale s'écarte de la platine de blocage de sorte à permettre une meilleure préhension de l'extrémité proximale, afin de détacher ladite extrémité du bord de la deuxième ouverture.

Selon un autre mode de réalisation de l'invention, l'extrémité distale de la lame de blocage s'étend perpendiculairement à sa première face. Ce mode de réalisation est destiné à faciliter le positionnement de ladite extrémité dans la première ouverture ménagée dans le support.

Selon un autre mode de réalisation de l'invention, la platine de guidage est délimitée par deux parois latérales, parallèles ou sensiblement parallèles entre elles. De préférence, les parois latérales sont sensiblement perpendiculaires à la première face de la lame de blocage, de manière à former deux rails destinés à s'enchâsser dans des glissières présentes à la surface d'un connecteur d'écran.

Selon un autre mode de réalisation de l'invention, les moyens de liaison comprennent au moins une paroi s'étendant perpendiculairement ou sensiblement perpendiculairement à la face externe du support. En d'autres termes, au moins une paroi maintient la platine de guidage au support. De façon avantageuse, contrairement à l'état de la technique, il n'est plus nécessaire de prévoir un dégagement de l'autre côté du support, pour permettre la présence d'une extrémité d'un plot d'insertion. De ce fait, le dispositif de fixation selon l'invention est plus compact que ceux proposés par l'état de la technique.

De préférence, une ou plusieurs parois s'étendent selon une direction d'allongement passant par deux ouvertures du support, situées de part et d'autre de la platine de guidage.

Selon une variante de réalisation, la lame de blocage et/ou le support sont réalisés à partir d'un métal, par exemple en acier, en magnéisium, en aluminium ou autres.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention concerne également un dispositif de fixation d'un connecteur électrique, composé d'un kit de fixation tel que décrit ci-dessus, la lame de blocage est positionnée contre la face externe du support, de sorte que l'extrémité proximale prend appui contre un bord de la deuxième ouverture de la face externe, l'extrémité distale prend appui contre un bord de la première ouverture de la face externe, et les moyens de liaison passent à travers l'encoche de la lame de blocage.

L'invention concerne également un dispositif électronique, tel qu'un écran à affichage dynamique, comprenant un dispositif de fixation tel que décrit ci-dessus, ainsi qu'un connecteur électrique ou un connecteur écran. Le connecteur électrique comporte sur une même face un plot et deux rails de guidage en vis-à-vis. La platine de guidage du dispositif de fixation est maintenue entre les deux rails de guidage afin de maintenir le connecteur électrique à une distance constante de la face externe du support. Une excroissance de la lame de blocage prend appui contre le plot du connecteur électrique, de manière à immobiliser le connecteur électrique le long de la platine de guidage.

On peut prévoir par exemple qu'une excroissance de la lame de blocage est formée par une bosse en contact avec un desdits rails de guidage, et qu'une autre excroissance de la lame de blocage est formée par une lamelle en contact avec le plot du connecteur électrique, de manière à immobiliser le connecteur électrique le long de la platine de guidage.

Selon une variante de réalisation, les rails de guidage comprennent au niveau d'une extrémité distale des rails, des moyens de blocage permettant de stopper la platine de blocage lorsque la platine de guidage glisse entre les rails de guidage, en direction de l'extrémité distale des rails et au-delà d'une certaine distance.

Selon une variante de réalisation, le plot présent à la surface du connecteur électrique est positionnée en vis-à-vis d'une extrémité proximale des rails de guidage, extrémité opposée à l'extrémité distale des rails, afin de bloquer le déplacement de la platine de guidage entre les rails de guidage, comme décrit ci-dessus, entre l'extrémité proximale et l'extrémité distale des rails de guidage.

Selon une variante de réalisation, les rails de guidage sont insérés en force, entre la platine de guidage et au moins une bosse présente sur la seconde face de la lame de blocage. Ce mode de réalisation permet un meilleur maintien du connecteur électrique le long de la platine de guidage.

L'invention concerne aussi un véhicule automobile comprenant un dispositif électronique décrit ci-dessus.

### Description des figures

L'invention sera mieux comprise, grâce à la description ci-après, qui se rapporte à des modes de réalisations préférés, donnés à titre d'exemples non limitatifs, et expliqués avec référence aux dessins schématiques annexés, dans lesquels :
[Fig. 1] illustre une vue en perspective des éléments composant un kit de fixation selon l'invention, à savoir, un support et une lame de blocage ;
[Fig. 2] illustre une coupe longitudinale du support composant le kit de fixation représenté sur la figure 1 ;
[Fig. 3] illustre une vue en perspective d'une lame de blocage composant le kit de fixation représenté sur la figure 1 ;
[Fig. 4] illustre une coupe longitudinale d'un dispositif de fixation selon l'invention ;
[Fig. 5] illustre un connecteur écran maintenu par un dispositif de fixation représenté sur la figure 4.

### Description détaillée de l'invention

Pour rappel, l'invention propose un kit de fixation d'un connecteur écran sur un châssis d'écran, de plus faible encombrement et d'utilisation plus fiable.

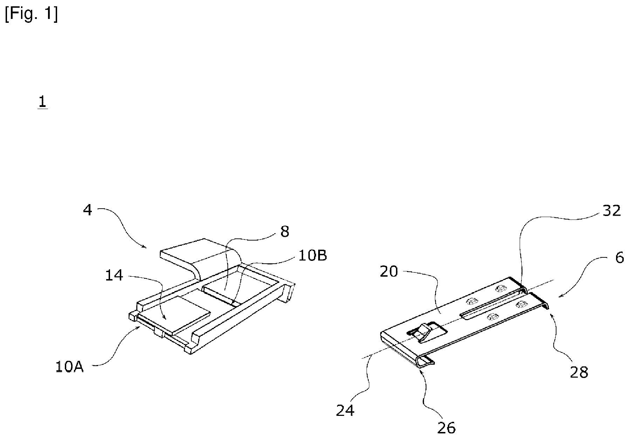

Comme illustré par la figure 1, un kit de fixation 1 d'un connecteur écran selon l'invention, se compose d'un support 4 et d'une lame de blocage 6. Le support 4 délimite une partie d'un châssis d'écran à affichage dynamique. L'intégralité du châssis n'est pas représenté sur les figures illustrant l'invention, afin de faciliter la compréhension de celle-ci.

Selon une variante de réalisation non illustrée, le support 4 peut être dissocié du châssis et comporter des moyens de fixation permettant son montage sur un autre type de châssis. En d'autres termes, le support peut être un élément distinct d'un châssis, destiné à être monté sur un châssis.

Le support 4 est délimité par une face externe 8, orientée vers l'extérieur du châssis. La face externe 8 est traversée par une première ouverture 10A et une deuxième ouverture 10B. Les ouvertures sont de forme sensiblement identique, dans le cas présent, de forme rectangulaire, alignées et parallèles entre elles. La longueur d'une ouverture est comprise entre 20 mm et 80 mm, de préférence entre 40 mm et 60 mm, la largeur d'une ouverture est comprise entre 10 mm et 40 mm, de préférence entre 20 mm et 30 mm.

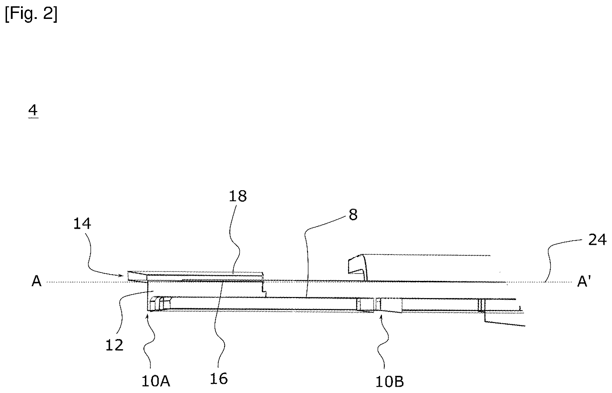

Comme illustré par la figure 2, entre la première ouverture 10A et la deuxième ouverture 10B est présente une paroi 12 perpendiculaire ou sensiblement perpendiculaire à la face externe 8. La paroi s'étend le long d'un axe longitudinal AA' passant par le centre des ouvertures. La longueur de la paroi, mesurée le long de l'axe longitudinal AA', est comprise entre 10 mm et 20 mm, de préférence de l'ordre de 11 mm. L'épaisseur de la paroi, mesurée selon une direction perpendiculaire à l'axe longitudinal AA', est comprise entre 2,5 mm et 6 mm, de préférence de l'ordre de 4 mm. La hauteur de la paroi 12 est comprise entre 2,5 mm et 10 mm, de préférence de l'ordre de 6 mm.

La paroi 12 maintient à distance de la face externe 8 du support, une platine de guidage 14. La platine de guidage est délimitée par une première face 16 en vis-à-vis de la face externe 8 et une seconde face 18 opposée. La platine est de forme rectangulaire. La plus grande dimension de la platine est parallèle ou sensiblement parallèle à l'axe longitudinal AA', et sa valeur est comprise entre 10 mm et 20 mm, de préférence de l'ordre de 11 mm. La largeur de la platine est comprise entre 10 mm et 50 mm, de préférence de l'ordre de 10 mm. L'épaisseur de la platine est de l'ordre de 1 mm.

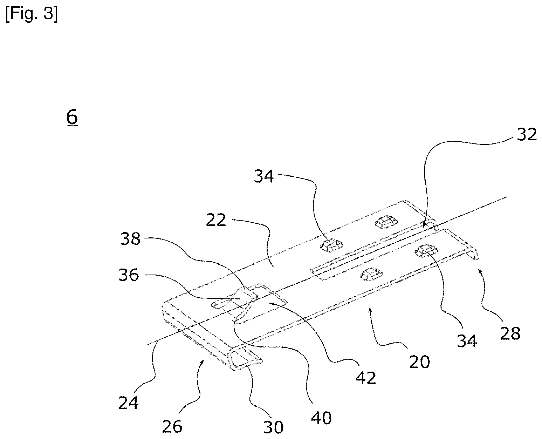

Comme illustré par la figure 3, la lame de blocage 6 est délimitée par une première face 20 opposée à une seconde face 22. La première et la seconde face sont planes ou sensiblement planes et parallèles entre elles. La lame de blocage s'étend le long d'une direction principale 24, entre une extrémité proximale 26 et une extrémité distale 28. La longueur de la lame de blocage 6, mesurée le long de la direction principale 24, est comprise entre 30 mm et 100 mm, de préférence entre 40 mm et 80 mm. La largeur de la lame de blocage 6, mesurée perpendiculairement à la direction principale 24, est comprise entre 20 mm et 40 mm de préférence entre 25 mm et 35 mm. L'épaisseur de la lame de blocage est comprise entre 0,5 mm et 2 mm, de préférence de l'ordre de 0,8 mm.

Les extrémités proximale et distale de la lame de blocage sont recourbées en direction de sa première face 20. L'extrémité proximale 26 forme un coude, apte à entourer un bord de la deuxième ouverture 10B de la face externe. Le bout 30 de l'extrémité proximale 26 s'écarte de la lame de blocage, de sorte à permettre une meilleure préhension de l'extrémité proximale. L'extrémité distale 28 de la lame de blocage s'étend perpendiculairement à sa première face 20. Ce mode de réalisation est destiné à faciliter le positionnement de ladite extrémité dans la première ouverture 10A ménagée dans le support, lorsque l'extrémité proximale 26 est déjà engagée dans la deuxième ouverture 10B.

La lame de blocage 6 comporte une encoche 32 au niveau de son extrémité distale 28, centrée sur la direction principale 24 et s'étendant le long de cette direction. L'encoche 32 est configurée pour permettre l'insertion, au moins en partie, de la paroi 12 maintenant la platine de guidage 14 au support 4, comme décrit ci-après. Selon le présent exemple, la longueur de l'encoche 32 est comprise entre 25 mm et 85 mm, de préférence entre 40 mm et 60 mm. La largeur de l'encoche est comprise entre 4 mm et 21 mm, de préférence entre 9 mm et 16 mm.

De chaque côté de l'encoche 32 sont présentes deux excroissances ou bosses 34, alignées ou sensiblement alignées le long de la direction principale 24. Les bosses 34 ont une hauteur, mesurée selon une direction perpendiculaire à la face seconde face 22, comprise entre 5 mm et 25 mm, de préférence entre 10 mm et 20 mm.

La lame de blocage 6 comporte également une autre excroissance sous la forme d'une lamelle 36. La lamelle 36 s'étend le long de la direction principale 24 et comporte une extrémité libre 38 faisant face à l'encoche 32. La lamelle est légèrement courbée de sorte que son extrémité libre 38 s'écarte de la seconde face 22 de la lame de blocage. La longueur de la lamelle est comprise entre 10 mm et 30 mm, de préférence entre 8 mm et 20 mm.

La lamelle 36 est maintenue à la lame de blocage 6 au niveau d'un bord 40 d'une ouverture 42 ménagée dans la lame de blocage. L'ouverture 42 de forme rectangulaire est de dimensions supérieures à la lamelle 36, de manière à permettre l'insertion de l'extrémité libre 38 dans l'ouverture 42.

La lamelle 36 et/ou la lame de blocage 6 sont ici réalisées en métal, par exemple en acier ou en aluminium.

Dans le mode de réalisation décrit, la lamelle 36 et la lame de blocage 6 sont réalisées dans le même matériau, par exemple d'une pièce. Si nécessaire, l'épaisseur de la lamelle 36 peut être différente de l'épaisseur de la lame de blocage 6, afin de permettre un plus grand fléchissement de l'extrémité libre 38 de la lamelle, en direction de l'ouverture 42. L'extrémité libre 38 de la lamelle est apte à se déplacer de façon réversible jusqu'à la surface de la lame de blocage, pour ne pas s'opposer au déplacement d'un connecteur écran que l'on souhaite détacher de la platine de guidage 14.

La lame de blocage 6 est ainsi configurée pour se monter aisément et rapidement sur le support 4 de sorte à réaliser un dispositif de fixation 2 selon l'invention.

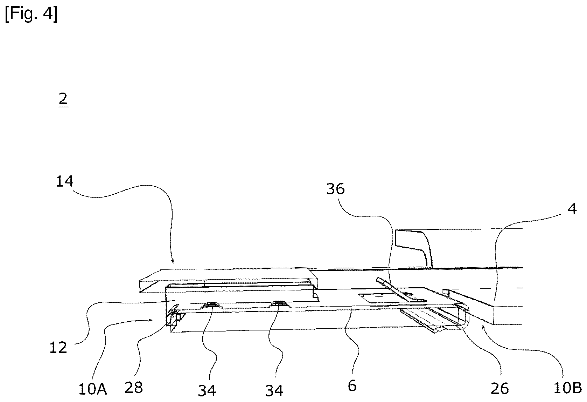

Pour cela, une première étape consiste à présenter l'extrémité proximale 26 de la lame de blocage 6 en vis-à-vis d'un bord de la deuxième ouverture 10B, ménagée dans le support, en insérant en même temps les moyens de liaison 12 du support 4 dans l'encoche 32 de la lame de blocage. Lors d'une deuxième étape, la lame de blocage 6 est déplacée le long du support 4 jusqu'à ce l'extrémité proximale 26 de la lame de blocage prenne appui contre un bord de la deuxième ouverture 10B du support. Selon une troisième étape, la lame de blocage est pivotée jusqu'à ce que son extrémité distale 28 s'insère dans la première ouverture 10A du support, afin d'obtenir un dispositif de fixation selon l'invention, tel que représenté par la figure 4.

De façon avantageuse, la platine de guidage 14 ne comporte pas d'excroissance destinée à bloquer la translation d'un connecteur écran, lié à ladite platine. De ce fait, le dispositif de fixation est moins susceptible d'être endommagé en raison d'un mauvais alignement entre le connecteur écran et la platine de guidage.

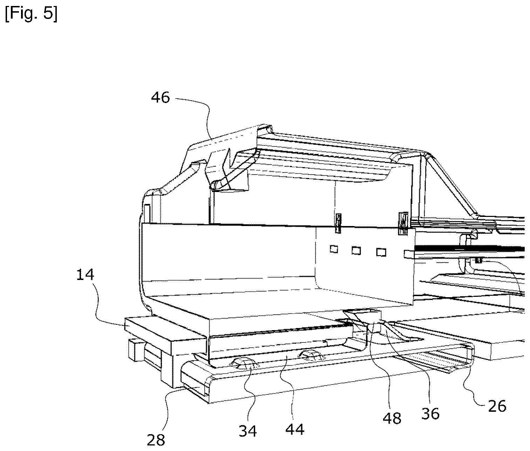

Selon l'invention, un connecteur écran 46 est maintenu au dispositif de fixation par l'intermédiaire de la platine de guidage 14 et de la lame de blocage 6. Plus précisément, la platine de guidage 14 est destinée à être insérée entre deux rails de guidage, présents à la surface d'un connecteur écran, afin de maintenir le connecteur écran à une distance constante de la face externe 8 du support 4. Le connecteur écran 46 est par la suite immobilisé lorsque les bosses 34 de la lame de blocage 6 et l'extrémité libre 38 de la lamelle 36 prennent appui contre le connecteur écran, comme illustré par la figure 5. Plus précisément, les bosses 34 sont configurées pour prendre appui contre les rails de guidage 44 présents à la surface du connecteur écran 46, lorsque la platine de guidage 14 est enchâssée dans lesdits rails. L'extrémité libre 38 de la lamelle 36 est configurée pour servir de butée à un plot 48 présente sur le connecteur écran. Ainsi, de façon avantageuse, le connecteur écran 46 est maintenu de façon plus sûre au support 4, par un dispositif de fixation de faible encombrement. Pour libérer le connecteur écran, il suffit simplement d'abaisser l'extrémité libre 38 de la lamelle 36, en direction du support 4, afin que la lamelle 36 ne vienne plus en butée du plot 48, lorsqu'on déplace le connecteur écran par rapport à la platine.

## Revendications

1. Kit de fixation (1) d'un connecteur électrique sur un châssis, **caractérisé en ce qu'**il comprend :
- un support (4) délimité par une face externe (8), la face externe étant traversée par une première ouverture (10A) et une deuxième ouverture (10B), entre les deux ouvertures (10A, 10B) sont présents des moyens de liaison (12), les moyens de liaison maintenant à distance de la face externe (8) du support (4) une platine de guidage (14) ; et
- une lame de blocage (6), la lame de blocage étant délimitée par une première face (20) opposée à une seconde face (22), la lame de blocage (6) s'étendant le long d'une direction principale (24) entre une extrémité proximale (26) et une extrémité distale (28), les extrémités proximale et distale étant recourbées en direction de la première face (20), l'extrémité distale (28) comportant une encoche (32) qui s'étend le long de la direction principale (24), de sorte à permettre le passage des moyens de liaison (12) du support, la seconde face (22) de la lame de blocage (6) comprenant au moins une excroissance (34, 36), agencée de manière à être en vis-à-vis de la platine guidage (14), lorsque :
- l'extrémité proximale (26) prend appui contre un bord de la deuxième ouverture (10B) de la face externe (8) ; et
- l'extrémité distale (28) prend appui contre un bord de la première ouverture (10A) de la face externe (8) ; et
- les moyens de liaison (12) passent à travers l'encoche (32) de la lame de blocage.

2. Kit de fixation (1) d'un connecteur électrique selon la revendication 1, **caractérisé en ce qu'**entre l'encoche (32) et un bord latéral de la lame de blocage (6), est présente au moins une bosse (34).

3. Kit de fixation (1) d'un connecteur électrique selon la revendication 1 ou 2, **caractérisé en ce que** la lame de blocage (6) comprend une butée rétractable, au niveau de sa seconde face (22), entre l'extrémité proximale (26) et l'encoche (32).

4. Kit de fixation (1) d'un connecteur électrique selon la revendication 3, **caractérisé en ce que** la butée rétractable est formée par une lamelle (36) souple qui s'étend le long de la direction principale (24) de la lame de blocage, la lamelle (36) comportant une extrémité libre (38) faisant face à l'extrémité distale (28) de la lame de blocage.

5. Kit de fixation (1) d'un connecteur électrique selon la revendication 4, **caractérisé en ce que** la lame de blocage (6) comporte un évidement, en vis-à-vis de la lamelle (36), apte à accueillir l'extrémité libre (38) de la lamelle.

6. Kit de fixation (1) d'un connecteur électrique selon l'une des revendications 1 à 5, **caractérisé en ce que** l'extrémité proximale (26) de la lame de blocage (6) forme un coude, apte à entourer un bord de la deuxième ouverture (10B) de la face externe (8).

7. Kit de fixation (1) d'un connecteur électrique selon l'une des revendications 1 à 6, **caractérisé en ce que** l'extrémité distale (28) de la lame de blocage (6) s'étend perpendiculairement à sa première face (20).

8. Kit de fixation (1) d'un connecteur électrique selon l'une des revendications 1 à 7, **caractérisé en ce que** les moyens de liaison comprennent au moins une paroi (12) s'étendant perpendiculairement ou sensiblement perpendiculairement à la face externe (8) du support.

9. Dispositif de fixation (2) d'un connecteur électrique, composé d'un kit de fixation (1) selon l'une des revendications 1 à 8, **caractérisé en ce que** la lame de blocage (6) est positionnée contre la face externe (8) du support (4), de sorte que l'extrémité proximale (26) prend appui contre un bord de la deuxième ouverture (10B) de la face externe (8), l'extrémité distale (28) prend appui contre un bord de la première ouverture (10A) de la face externe (8), et que les moyens de liaison (12) passent à travers l'encoche (32) de la lame de blocage.

10. Dispositif électronique comprenant un dispositif de fixation (2) selon la revendication 9 ainsi qu'un connecteur électrique (46) comportant sur une même face un plot (48) et deux rails de guidage (44) en vis-à-vis, **caractérisé en ce que** la platine de guidage (14) du dispositif de fixation (2) est maintenue entre les deux rails de guidage (44) afin de maintenir le connecteur électrique (46) à une distance constante de la face externe (8) du support (4), et **en ce qu'**une excroissance (34, 36) de la lame de blocage (6) prend appui contre le plot (48) du connecteur électrique (46) de manière à immobiliser le connecteur électrique le long de la platine de guidage (14).

11. Dispositif électronique comprenant un dispositif de fixation (2) selon la revendication 9 ainsi qu'un connecteur électrique (46) comportant sur une même face un plot (48) et deux rails de guidage (44) en vis-à-vis, **caractérisé en ce que** la platine de guidage (14) du dispositif de fixation (2) est maintenue entre les deux rails de guidage (44) afin de maintenir le connecteur électrique (46) à une distance constante de la face externe (8) du support (4), **en ce qu'**une excroissance (34) de la lame de blocage (6) est formée par une bosse (34) en contact avec un desdits rails de guidage (44), et **en ce qu'**une autre excroissance de la lame de blocage (6) est formée par une lamelle (36) en contact avec le plot (48) du connecteur électrique (46), de manière à immobiliser le connecteur électrique le long de la platine de guidage (14).

## Patentansprüche

1. Befestigungskit (1) zur Befestigung eines elektrischen Verbinders an einem Rahmen, **dadurch gekennzeichnet, dass** es umfasst:
- einen Träger (4), der durch eine Außenseite (8) begrenzt wird, wobei die Außenseite von einer ersten Öffnung (10A) und einer zweiten Öffnung (10B) durchdrungen wird, wobei zwischen den beiden Öffnungen (10A, 10B) Verbindungsmittel (12) vorhanden sind, wobei die Verbindungsmittel eine Führungsplatte (14) im Abstand von der Außenseite (8) des Trägers (4) halten; und
- eine Sperrzunge (6), wobei die Sperrzunge durch eine erste Seite (20) begrenzt wird, die entgegengesetzt zu einer zweiten Seite (22) ist, wobei die Sperrzunge (6) sich entlang einer Hauptrichtung (24) zwischen einem proximalen Ende (26) und einem distalen Ende (28) erstreckt, wobei das proximale und das distale Ende in Richtung der ersten Seite (20) umgebogen sind, wobei das distale Ende (28) eine Ausnehmung (32) umfasst, die sich entlang der Hauptrichtung (24) erstreckt, so dass das Durchführen der Verbindungsmittel (12) des Trägers ermöglicht wird, wobei die zweite Seite (22) der Sperrzunge (6) mindestens einen Vorsprung (34, 36) aufweist, der so angeordnet ist, dass er gegenüber der Führungsplatte (14) liegt, wenn:
- das proximale Ende (26) an einem Rand der zweiten Öffnung (10B) der Außenseite (8) anliegt; und
- das distale Ende (28) an einem Rand der ersten Öffnung (10A) der Außenseite (8) anliegt; und
- die Verbindungsmittel (12) durch die Ausnehmung (32) der Sperrzunge verlaufen.

2. Befestigungskit (1) für einen elektrischen Verbinder nach Anspruch 1, **dadurch gekennzeichnet, dass** zwischen der Ausnehmung (32) und einem seitlichen Rand der Sperrzunge (6) mindestens eine Erhebung (34) vorhanden ist.

3. Befestigungskit (1) für einen elektrischen Verbinder nach Anspruch 1 oder 2, **dadurch gekennzeichnet, dass** die Sperrzunge (6) einen einziehbaren Anschlag an ihrer zweiten Seite (22), zwischen dem proximalen Ende (26) und der Ausnehmung (32), umfasst.

4. Befestigungskit (1) für einen elektrischen Verbinder nach Anspruch 3, **dadurch gekennzeichnet, dass** der einziehbare Anschlag durch eine flexible Lamelle (36) gebildet wird, die sich entlang der Hauptrichtung (24) der Sperrzunge erstreckt, wobei die Lamelle (36) ein freies Ende (38) umfasst, das gegenüber dem distalen Ende (28) der Sperrzunge liegt.

5. Befestigungskit (1) für einen elektrischen Verbinder nach Anspruch 4, **dadurch gekennzeichnet, dass** die Sperrzunge (6) eine Aussparung gegenüber der Lamelle (36) umfasst, die geeignet ist, das freie Ende (38) der Lamelle aufzunehmen.

6. Befestigungskit (1) für einen elektrischen Verbinder nach einem der Ansprüche 1 bis 5, **dadurch gekennzeichnet, dass** das proximale Ende (26) der Sperrzunge (6) einen Bogen bildet, der geeignet ist, einen Rand der zweiten Öffnung (10B) der Außenseite (8) zu umgeben.

7. Befestigungskit (1) für einen elektrischen Verbinder nach einem der Ansprüche 1 bis 6, **dadurch gekennzeichnet, dass** das distale Ende (28) der Sperrzunge (6) sich senkrecht zu ihrer ersten Seite (20) erstreckt.

8. Befestigungskit (1) für einen elektrischen Verbinder nach einem der Ansprüche 1 bis 7, **dadurch gekennzeichnet, dass** die Verbindungsmittel mindestens eine Wand (12) umfassen, die sich senkrecht oder im Wesentlichen senkrecht zu der Außenseite (8) des Trägers erstreckt.

9. Befestigungsvorrichtung (2) für einen elektrischen Verbinder, die aus einem Befestigungskit (1) nach einem der Ansprüche 1 bis 8 besteht, **dadurch gekennzeichnet, dass** die Sperrzunge (6) an der Außenseite (8) des Trägers (4) positioniert ist, so dass das proximale Ende (26) an einem Rand der zweiten Öffnung (10B) der Außenseite (8) anliegt, das distale Ende (28) an einem Rand der ersten Öffnung (10A) der Außenseite (8) anliegt und die Verbindungsmittel (12) durch die Ausnehmung (32) der Sperrzunge verlaufen.

10. Elektronische Vorrichtung, umfassend eine Befestigungsvorrichtung (2) nach Anspruch 9 sowie einen elektrischen Verbinder (46), der auf einer selben Seite einen Klotz (48) und zwei Führungsschienen (44) einander gegenüber aufweist, **dadurch gekennzeichnet, dass** die Führungsplatte (14) der Befestigungsvorrichtung (2) zwischen den beiden Führungsschienen (44) gehalten wird, um den elektrischen Verbinder (46) in einem konstanten Abstand von der Außenseite (8) des Trägers (4) zu halten, und dass ein Vorsprung (34, 36) der Sperrzunge (6) an dem Klotz (48) des elektrischen Verbinders (46) anliegt, so dass der elektrische Verbinder entlang der Führungsplatte (14) immobilisiert wird.

11. Elektronische Vorrichtung, umfassend eine Befestigungsvorrichtung (2) nach Anspruch 9 sowie einen elektrischen Verbinder (46), der auf einer selben Seite einen Klotz (48) und zwei Führungsschienen (44) einander gegenüber aufweist, **dadurch gekennzeichnet, dass** die Führungsplatte (14) der Befestigungsvorrichtung (2) zwischen den beiden Führungsschienen (44) gehalten wird, um den elektrischen Verbinder (46) in einem konstanten Abstand von der Außenseite (8) des Trägers (4) zu halten, dass ein Vorsprung (34) der Sperrzunge (6) durch eine Erhebung (34) in Kontakt mit einer der Führungsschienen (44) gebildet wird und dass ein weiterer Vorsprung der Sperrzunge (6) durch eine Lamelle (36) in Kontakt mit dem Klotz (48) des elektrischen Verbinders (46) gebildet wird, so dass der elektrische Verbinder entlang der Führungsplatte (14) immobilisiert wird.

## Claims

1. Fastening kit (1) for fastening an electrical connector to a chassis, **characterized in that** it comprises:
- a support (4) delimited by an outer face (8), the outer face having a first opening (10A) and a second opening (10B) passing through it, connecting means (12) are present between the two openings (10A, 10B), the connecting means keeping a guide plate (14) at a distance from the outer face (8) of the support (4); and
- a blocking blade (6), the blocking blade being delimited by a first face (20) on the opposite side to a second face (22), the blocking blade (6) extending along a main direction (24) between a proximal end (26) and a distal end (28), the proximal and distal ends being curved towards the first face (20), the distal end (28) having a notch (32) extending along the main direction (24) so as to allow the connecting means (12) of the support to pass, the second face (22) of the blocking blade (6) comprising at least one protuberance (34, 36), which is arranged so as to be opposite the guide plate (14) when:
- the proximal end (26) bears against an edge of the second opening (10B) of the outer face (8); and
- the distal end (28) bears against an edge of the first opening (10A) of the outer face (8); and
- the connecting means (12) pass through the notch (32) of the blocking blade.

2. Fastening kit (1) for an electrical connector according to Claim 1, **characterized in that** at least one boss (34) is present between the notch (32) and a lateral edge of the blocking blade (6).

3. Fastening kit (1) for an electrical connector according to Claim 1 or 2, **characterized in that** the blocking blade (6) comprises a retractable stop, on its second face (22), between the proximal end (26) and the notch (32).

4. Fastening kit (1) for an electrical connector according to Claim 3, **characterized in that** the retractable stop is formed by a flexible strip (36) extending along the main direction (24) of the blocking blade, the strip (36) having a free end (38) facing the distal end (28) of the blocking blade.

5. Fastening kit (1) for an electrical connector according to Claim 4, **characterized in that** the blocking blade (6) has a recess, opposite the strip (36), that can receive the free end (38) of the strip.

6. Fastening kit (1) for an electrical connector according to one of Claims 1 to 5, **characterized in that** the proximal end (26) of the blocking blade (6) forms a bend, which can surround an edge of the second opening (10B) of the outer face (8).

7. Fastening kit (1) for an electrical connector according to one of Claims 1 to 6, **characterized in that** the distal end (28) of the blocking blade (6) extends perpendicularly to its first face (20).

8. Fastening kit (1) for an electrical connector according to one of Claims 1 to 7, **characterized in that** the connecting means comprise at least one wall (12) extending perpendicularly or substantially perpendicularly to the outer face (8) of the support.

9. Fastening device (2) for an electrical connector, consisting of a fastening kit (1) according to one of Claims 1 to 8, **characterized in that** the blocking blade (6) is positioned against the outer face (8) of the support (4), such that the proximal end (26) bears against an edge of the second opening (10B) of the outer face (8), the distal end (28) bears against an edge of the first opening (10A) of the outer face (8), and that the connecting means (12) pass through the notch (32) of the blocking blade.

10. Electronic device comprising a fastening device (2) according to Claim 9 and an electrical connector (46) having, on the same face, a stud (48) and two guide rails (44) opposite one another, **characterized in that** the guide plate (14) of the fastening device (2) is held between the two guide rails (44) in order to keep the electrical connector (46) at a constant distance from the outer face (8) of the support (4), and **in that** a protuberance (34, 36) of the blocking blade (6) bears against the stud (48) of the electrical connector (46) so as to immobilize the electrical connector along the guide plate (14).

11. Electronic device comprising a fastening device (2) according to Claim 9 and an electrical connector (46) having, on the same face, a stud (48) and two guide rails (44) opposite one another, **characterized in that** the guide plate (14) of the fastening device (2) is held between the two guide rails (44) in order to keep the electrical connector (46) at a constant distance from the outer face (8) of the support (4), **in that** a protuberance (34) of the blocking blade (6) is formed by a boss (34) in contact with one of said guide rails (44), and **in that** another protuberance of the blocking blade (6) is formed by a strip (36) in contact with the stud (48) of the electrical connector (46), so as to immobilize the electrical connector along the guide plate (14).
